# EUROPÄISCHE PATENTANMELDUNG

(11) **EP 3 689 709 A1**
(43) Veröffentlichungstag der Anmeldung: **05.08.2020**
(21) Anmeldenummer: 20000018.0
(22) Anmeldetag: 15.01.2020
(51) Int. Cl.: B62D 7/02, B62D 7/15, B62D 11/20, B62D 11/04, B62D 61/10, B62D 63/02

(54) **FAHRPLATTFORM**

(30) Priorität: 01.02.2019 DE 202019000469 U
(71) Anmelder: isel GmbH & Co. KG, 13627 Berlin-Charlottenburg (DE)
(72) Erfinder: Isert, Hugo, D-13627 Berlin-Charlottenburg (DE)
(74) Vertreter: Weihrauch, Frank

(57) **Zusammenfassung**

Die Erfindung betrifft eine Fahrplattform, aufweisend ein Fahrgestell, eine Mehrzahl von Doppelradeinheiten und eine Steuerungseinheit, wobei die Doppelradeinheiten (13) an dem Fahrgestell angeordnet sind, wobei jede der Doppelradeinheiten (13) ein Drehgestell (1), ein erstes (2) und ein zweites Laufrad (3) sowie eine Antriebseinheit (4) aufweist, wobei das Drehgestell (1) gegenüber einem Fahrgestell (5) um eine Vertikalachse (11) in einem Drehgestelllager drehbar gelagert ist, wobei das erste (2) und das zweite Laufrad (3) mittels einer Radaufnahme (6) rotierbar um eine gemeinsame Horizontalachse (7) an dem Drehgestell aufgenommen sind, wobei die Antriebseinheit (4) einen ersten Radantrieb (8), einen zweiten Radantrieb (9) und eine Steuerungseinheit (10) aufweist, wobei der erste Radantrieb (8) dem ersten Laufrad (2) und der zweite Radantrieb (9) dem zweiten Laufrad (3) zugeordnet ist, und wobei jeder der beiden Radantriebe (8, 9) ausgebildet ist, das jeweils zugeordnete Laufrad (2, 3) separat mit einem Drehmoment (12) zu beaufschlagen, und wobei das Drehgestell (1) ausgebildet ist, sich mittels einer unterschiedlichen Drehgeschwindigkeit der Laufräder (2, 3) gegenüber dem Fahrgestell (5) um die Vertikalachse (11) zu verdrehen.

## Beschreibung

Die Erfindung betrifft eine gelenkte Fahrplattform. Insbesondere betrifft die Erfindung eine Fahrplattform mit einer Zwillingsradlenkvorrichtung für ein allradgetriebenes Elektrofahrzeug.

Aus dem Stand der Technik sind verschiedene Möglichkeiten für Lenkvorrichtungen für Fahrzeuge bekannt. Bei einer Schwenkachslenkung, welche insbesondere als Drehschemellenkung bekannt ist, wird eine gesamte Achse einschließlich der beiden an deren Enden angeordneten Rädern um eine Drehachse geschwenkt. Bei der Achsschenkellenkung wird jedes Rad an einem Achsstummel geführt und um eine separate Drehachse geschwenkt. Die Verdrehung um die Drehachse wird mittels einer Lenkkraft bewirkt, die in der Regel durch ein Lenkgetriebe bereltgestellt wird.

Aufgabe der Erfindung ist es, eine Fahrplattform aufzuzeigen, welche eine gute Lenkbarkeit auf kleinem Raum aufweist, ein schnelles Lenken ermöglicht, einen geringen Bauraum beansprucht und kostengünstig herstellbar ist.

Die Aufgabe wird durch die im Patentanspruch 1 aufgeführten Merkmale gelöst. Bevorzugte Weiterbildungen ergeben sich aus den Unteransprüchen.

Erfindungsgemäß weist die Fahrplattform ein Fahrgestell, eine Mehrzahl von Doppelradeinheiten und eine Steuerungseinheit auf.

Das Fahrgestell kann je nach Anwendungsfall unterschiedlich ausgebildet sein. Erfindungsgemäß sind an dem Fahrgestell die Doppelradeinheiten angeordnet.

Jede der Doppelradeinheiten weist ein Drehgestell, ein erstes und ein zweites Laufrad sowie eine Antriebseinheit auf.

Das Drehgestell ist erfindungsgemäß gegenüber einem Fahrgestell um eine Vertikalachse drehbar gelagert. Das Drehgestell kann vorzugsweise als Drehschemel ausgebildet sein; es ist jedoch auch in anderen Bauformen ausbildbar. Das Drehgestell ist in einem Drehgestelllager drehbar gelagert. In einer besonders einfachen Bauform des Drehgestelllagers ist ein zylindrischer Bolzen des Drehgestells in eine hohlzylindrische Öffnung des Fahrgestells eingeschoben oder umgekehrt. Dies ermöglicht eine Rotation des Drehgestells um die Vertikalachse. Das Drehgestell ist passiv verdrehbar gelagert.

Das Drehgestell ist vorzugsweise mittels eines Federelements stoßgedämpft ausgebildet.

Das erste und das zweite Laufrad sind mittels einer Radaufnahme rotierbar um eine gemeinsame Horizontalachse an dem Drehgestell aufgenommen. Die Radaufnahme ist so gestaltet, dass die beiden Laufräder vorzugsweise in räumlicher Nähe und mit paralleler Laufrichtung angeordnet sind. Hierzu können die Radaufnahmen auch baulich verbunden sein. So können die Radaufnahmen einen gemeinsamen Achskörper oder zwei Teilachsen aufweisen. Die Radaufnahmen sind so ausgestaltet, dass sie eine Rotationsbewegung der Laufräder um die gemeinsame Horizontalachse ermöglichen. Die einfachste Bauform des Drehgestells besteht in einer Radgabel, welche die Radaufnahmen der beiden Laufräder aufnimmt. Die konstruktive Ausbildung kann auch in anderen Bauformen von Achsen und Radaufnahmen erfolgen, welche die beschriebenen Merkmale aufweisen.

Die beiden Laufräder sind in der Radaufnahme voneinander unabhängig drehbar gelagert.

Die Antriebseinheit weist erfindungsgemäß einen ersten Radantrieb, einen zweiten Radantrieb und eine Steuereinheit auf.

Der erste Radantrieb ist dabei dem ersten Laufrad und der zweite Radantrieb dem zweiten Laufrad zugeordnet, die Radantriebe sind vorzugweise elektromotorisch realisiert. So ist in einer Ausbildung jeder Radantrieb beispielsweise durch einen Nabenmotor realisiert. Vorteilhaft sind hierbei insbesondere der geringe Platzbedarf sowie eine effiziente Kraftübertragung durch einen Direktantrieb.
In einer anderen Bauform sind Radantrieb und Laufrad von einander beabstandet angeordnet. Die Kraftübertragung erfolgt dann über ein Getriebe. Diese Bauform ermöglicht es beispielsweise, für beide Radantriebe einen gemeinsamen Motor einzusetzen und die Zuordnung der Drehmomentübertragung an die beiden Laufräder mittels geeigneter Getriebe vorzunehmen.

Erfindungsgemäß ist jeder der beiden Radantriebe dazu ausgebildet, das jeweils zugeordnete Laufrad separat mit einem Drehmoment zu beaufschlagen. Mittels der separaten Drehmomentbeaufschlagung wird die Drehgeschwindigkeit jedes Laufrades einzeln festgelegt. Somit kann eine Vielzahl unterschiedlicher Betriebszustände in Bezug auf das Verhältnis der Drehbewegungen der beiden Laufräder zueinander eingestellt werden. Die Drehmomentbeaufschlagung kann dabei sowohl als Antrieb als auch als Abbremsung erfolgen.

Die wichtigsten möglichen Betriebszustände bestehen darin, beide Laufräder mit gleicher Geschwindigkeit drehen zu lassen, das erste Laufrad schneller als das zweite Laufrad zu drehen und umgekehrt, nur ein Laufrad zu drehen und das andere zu blockieren oder beide Laufräder in entgegengesetzten Richtungen zu drehen.

Im Fahrbetrieb ist es also unter anderem möglich, ein Laufrad stärker als das andere zu beschleunigen, ein Laufrad zu verzögern oder beide Laufräder unterschiedlich stark zu verzögern, das Beschleunigen nur eines Laufrades durchzuführen oder auch die Drehrichtung eines Laufrades oder beider Laufräder umzukehren.

Die Steuerungseinheit ist erfindungsgemäß mit beiden Radantrieben so verbunden, dass ein Steuersignal übertragbar ist. Sie ist dazu ausgebildet die Fahrbefehle vom Fahrer, dem Fahrzeug selbst oder einer anderen Quelle durch eine Anpassung des Steuersignals umzusetzen. Die Steuerungseinheit ist dazu ausgebildet ein Steuersignal an die Radantriebe zu übertragen. Das Steuersignal ist getrennt zu jeweils einem Radantrieb oder zu beiden Antrieben zusammen übertragbar. Das Steuersignal bremst oder beschleunigt jeden der Radantriebe einzeln und bewirkt so in der Folge eine Lenkbewegung oder gerade Fahrbewegung des Drehgestells und damit des Fahrzeugs. Die Steuerungseinheit kann baulich mit dem Drehgestell verbunden, aber auch an anderer Stelle, beispielsweise an einem Fahrgestell, angeordnet sein.

Die Steuerungseinheiten der erfindungsgemäß in einer Mehrzahl vorliegenden Doppelradeinheiten sind ausgebildet, die Doppelradeinheiten koordiniert zu steuern. Hierzu können die Steuerungseinheiten beispielsweise über einen Datenbus zusammengeschaltet sein. Ferner ist es möglich, die Steuerungseinheiten als eine einheitliche zentrale Steuerungsschaltung auszubilden. Es ist auch möglich, die Steuerungseinheiten jeweils an den Doppelradeinheiten anzuordnen und sternförmig mit einer zentralen Steuerungsschaltung zu verbinden. In jedem Fall sind die Steuerungseinheiten miteinander unmittelbar oder mittelbar datenverbunden.

Zusätzlich ist die Steuerungseinheit in der Lage die relative Ausrichtung des Drehgestells der Doppelradeinheit zu erfassen.

Die Steuerungseinheiten der Doppelradeinheiten sind in der Lage, die Radantriebe jeder Doppelradeinheit jeweils unabhängig von den Radantrieben der anderen Doppelradeinheiten zu betätigen. Durch das Zusammenwirken der Steuerungseinheiten der Doppelradeinheiten sind diese dabei ausgebildet, alle Doppelradeinheiten koordiniert für eine resultierende Fahrbewegung gezielt auszurichten und anzutreiben. So können beispielsweise geradlinige Bewegungen in jede Richtung erfolgen, ohne die Ausrichtung der Fahrplattform an sich zu ändern oder es können Rotationsbewegungen der Fahrplattform in beliebigen Radien um imaginäre Punkte in der Bewegungsebene durchgeführt werden. Ferner sind auch zusammengesetzte Bewegungen aus rotatorischen und translatorischen Bewegungsanteilen möglich. Bei der Rotation um einen imaginären Punkt kann dieser außerhalb oder innerhalb der Fläche des Fahrgestells liegen. Um zum Beispiel um eine Kurve zu fahren wird der imaginäre Punkt in den Scheitelpunkt der Kurve gelegt. Für eine Rotation des Fahrgestells auf der Stelle wird der imaginäre Punkt von der Steuerungseinheit in die Mittelhochachse des Fahrgestells gelegt. Richtet die Steuerungseinheit nun alle Doppelradeinheiten durch unterschiedliche Betätigung der jeweils beiden Radantriebe so aus, dass ihre Horizontalachsen auf der jeweiligen Verbindungslinie zwischen dem imaginären Punkt und dem vertikalen Drehpunkt der Doppelradeinheit liegen, erfolgt eine Rotation um den imaginären Punkt wenn die Laufräder der Doppelradeinheiten angetrieben werden. Die Drehzahl der Laufräder steht im Verhältnis - zu dem Abstand zu dem imaginären Punkt, wobei die Drehzahl mit größerem Abstand zunimmt.

In einer weiteren Bauform besitzt die Steuerungseinheit jeder Doppelradeinheit eine eigene Schnittstelle, welche in der Lage ist, mit den Steuerungseinheiten der anderen Doppelradeinheiten zu kommunizieren um eine gemeinsame Fahrbewegung zu koordinieren. Die Kommunikation kann kabelgebunden oder kabellos erfolgen. Diese Bauform besitzt den Vorteil gegenüber einer einzigen gemeinsamen zentralen Steuerungsschaltung, dass jede Doppelradeinheit ein vollständiges Modul bildet. Solche Doppelradmodule können günstig in Serie gefertigt werden. Diese Doppelradmodule können mit minimalen Aufwand zur Mobilisierung individueller Fahrgestelle eingesetzt werden. Eine einzelne Steuerungseinheit kann bei der Serienfertigung von fertigen Fahrplattformen vorteilhafter sein, da Kosten für mehrere Steuerungseinheiten vermieden werden.

Erfindungsgemäß ist das Drehgestell ausgebildet, sich mittels einer unterschiedlichen Drehgeschwindigkeit der Laufräder gegenüber dem Fahrgestell um die Vertikalachse zu verdrehen. Durch die parallele Anordnung der Laufräder wird durch eine unterschiedliche Drehgeschwindigkeit ein Drehmoment um die Rotationsachse der Laufräder hervorgerufen. Das Drehmoment wird von den Laufrädern auf das Drehgestell übertragen und bewirkt ein Drehmoment um die Vertikalachse und ruft eine Rotation des Drehgestells um die Vertikalachse hervor. Das Drehmoment, welches das Drehgestell verdreht, wird also zwischen dem Drehgestell und der Fahrbahn, und nicht zwischen dem Drehgestell und dem Fahrgestell erzeugt. Für eine optimale Übertragung des Drehmomentes ist die Vertikalachse vorzugsweise mittig zwischen den beiden Laufrädern angeordnet. So sind Lenkvorgänge auf kleinstem Raum möglich. So ist auch eine Lenkbewegung durch gegenlaufende Laufräder möglich.

Es sind auch andere Positionen der Laufräder zur Vertikalachse möglich, welche jeweils eigene Vorteile besitzen. Verläuft die Vertikalachse beispielsweise nicht direkt durch die Horizontalachse der Laufräder ergeben sich für das Drehgestell stabilisierende Konstruktionsmöglichkeiten. So kann die Verbindung zwischen den Radaufnahmen der Laufräder und dem Ansetzpunkt an der Vertikalachse beispielsweise als gefederter Hebelarm ausgebildet sein. Es ist dadurch bei geeigneter Anordnung der Federelemente eine bessere Verteilung von Stoßbelastungen möglich. Auch Stöße aus der Fahrtrichtung bei Fahrbahnunebenheiten treffen so nicht direkt rechtwinklig auf die Laufräder und Vertikalachse, womit vorteilhaft der Fahrkomfort erhöht und die dynamische Belastung der gesamten Vorrichtung reduziert wird.

Die erfindungsgemäße Fahrplattform ermöglicht bei bestimmungsgemäßem Betrieb die nachfolgend beschriebenen Lenk- und Fahrbewegungen.

Bei gleichen Drehgeschwindigkeiten der Laufräder einer Doppelradeinheit führen die Laufräder eine Geradeausfahrt durch. Das Drehgestell wird somit um seine Vertikalachse nicht verdreht.

Durch eine unterschiedliche Drehgeschwindigkeit der Laufräder wird dagegen eine Verdrehung des Drehgestells um die Vertikalachse hervorgerufen. Dabei verdreht sich bei einer Vorwärtsfahrt das Drehgestell in Richtung des langsamer drehenden Laufrades. Die Horizontalachse der Laufräder ändert damit ihre Lage und die Laufräder führen eine Kurvenfahrt aus. Da das Drehgestell an dem Fahrgestell angelenkt ist, kann damit die gesamte Fahrplattform eine Kurvenfahrt ausführen. Die Verdrehung des Drehgestells einer oder mehrerer Doppelradeinheiten gegen über dem Fahrgestell wird zur Lenkung der Fahrplattform genutzt. Wird nun wieder eine gleiche Drehgeschwindigkeit der Laufräder eingestellt, wird die Verdrehung des Drehgestells beendet und damit die Kurvenfahrt beendet. Die Laufräder führen wieder eine Geradeausfahrt aus, wobei die Richtung der nun vorliegenden Geradeausfahrt von der der ursprünglichen Geradeausfahrt infolge der zwischenzeitlichen Kurvenfahrt abweicht. Durch die Verwendung der mehreren Doppelradeinheiten kann durch zum Einen unterschiedliche Drehgeschwindigkeiten der Laufräder und zum Anderen durch unterschiedliche Ausrichtungen der Drehgestelle die Kurvenfahrt besser gesteuert werden. So kann zum Beispiel die rotatorische Ausrichtung des Fahrgestells während einer Fahrt konstant gehalten oder auch optimal an die Platzverhältnisse angepasst werden. Dies kann insbesondere im innerbetrieblichen Transport bei einer Einfahrt in enge Fahrwege zwischen Regalreihen vorteilhaft sein.

Ein Umkehren der Drehrichtung eines Laufrades gegenüber der Drehrichtung des anderen Laufrades ermöglicht eine Drehung des Drehgestells auf kleinstem Raum, vorzugsweise ohne eine Veränderung der Position der Vertikalachse. Das Drehgestell vollzieht dann eine Verdrehung auf der Stelle.

Dies ist insbesondere bei einer Wende oder bei Einparkmanövern sehr vorteilhaft.

Als besonderer Vorteil wurde somit überraschend eine Lösung gefunden, bei der eine Lenkbewegung ohne zusätzliche Mittel zur Bereitstellung einer Lenkkraft ermöglicht wird. Vielmehr wird die Änderung der Position der Fahrplattform allein mit den Antrieben der Laufräder bewirkt.

Ein weiterer Vorteil besteht darin, dass eine Lenkung im Stand ausgeführt werden kann. Ferner ist es als Vorteil möglich, die Lenkbewegung, insbesondere auch im Stand, besonders schnell zu vollziehen. Weiterhin ist es vorteilhaft, dass das Drehgestell eine Vollkreisverdrehung durchführen und jede beliebige Winkelstellung gegenüber dem Fahrgestell einnehmen kann. Damit geht einher, dass die Verdrehung in beiden Richtungen auch für einen beliebigen Winkel von über 360 Grad fortgesetzt werden kann und somit insbesondere bei Einparkmanövern für einen Wechsel zwischen einer Lenkrichtung von links nach rechts oder umgekehrt keine vorherige Rückstellung in eine vorbestimmte Neutralstellung erforderlich ist. Zudem ist es bei entsprechender Ausbildung der Radantriebe auch möglich, beispielsweise eine Vorwärtsfahrt auch dann auszuführen, wenn das Drehgestell um 180 Grad verdreht positioniert ist, indem die Laufräder in umgekehrter Drehrichtung betrieben werden.

Ferner ist es ein Vorteil, dass mit der erfindungsgemäßen Fahrplattform ohne Zusatzmaßnahmen ein allradgetriebenes Fahrzeug mit allen damit verbundenen Vorteilen aufgezeigt wird.

Gemäß einer vorteilhaften Weiterbildung sind die Antriebseinheiten der Doppelradeinheiten elektromotorisch ausgebildet. Der Vorteil in der Verwendung von Elektromotoren liegt in ihrer guten Steuerbarkeit und in einem hohen Wirkungsgrad. Die Steuereinheit kann bei einem elektromotorischen Antrieb direkt mit den beiden Radantrieben einer Doppelradeinheit verbunden sein und steuert dann beispielsweise den Betriebsstrom in Bezug auf die angelegte Spannung, die Stromstärke, die Flussrichtung und den Schaltzustand mittels eines Steuersignals. Das Drehmoment ist direkt von den Parametern des Betriebsstroms abhängig, was eine einfache Steuerung ermöglicht. Ein elektromotorischer Radantrieb kann bei geeigneter Ausbildung durch ein einfaches Umschalten des Stromflusses in beiden Laufrichtungen betrieben werden.

Ein weiterer Vorteil besteht in der Möglichkeit einer Rekuperation, also die elektromotorische Antriebseinheit so auszubilden, dass in einem Umkehrbetrieb eine Energierückgewinnung bei einem Bremsvorgang erfolgen kann. Zudem kann so das Bremssystem teilweise oder vollständig mit der Antriebseinheit realisiert werden. Im Gegensatz zu Reibungsbremsen kann damit zugleich eine praktisch verschleißfrei arbeitende Bremsvorrichtung bereitgestellt werden, weiche zudem keine Feinstaubemissionen durch einen Abrieb verursacht.

Die Antriebseinheit ist vorzugsweise durch die Verwendung von je einem Nabenmotor für den ersten und den zweiten Radantrieb realisiert.

Gemäß einer vorteilhaften Weiterbildung weist die Fahrplattform mindestens drei Doppelradeinheiten auf. Ab einer Anzahl von mindestens drei Doppelradeinheiten, deren Vertikalachsen dann in einem Dreieck angeordnet sind, besitzt die Fah rplattform automatisch (bei jeder Ausrichtung der Doppelradeinheiten) einen stabilen Stand und ein stabiler Fahrbetrieb ist ohne weiteres möglich.

Bei einer weiteren vorteilhaften Weiterbildung weist die Fahrplattform lediglich zwei Doppelradeinheiten auf, wobei die Steuerungseinheiten ausgebildet sind, eine Stellung der beiden Doppelradeinheiten zu verhindern, bei der eine jeweilige Rotationsachse der Laufräder beider Doppelradeinheiten auf einer Geraden angeordnet sind. Bei der beschriebenen Stellung ist kein stabiler Stand der Fahrplattform möglich, da ein Kippen der Fahrplattform um die Rotationsachse möglich ist. Die Steuerungseinheiten sind so ausgebildet, dass sie diese Radstellung elektronisch unmöglich machen und durch stabile Radstellungen und Fahrmanöver ersetzt. So kann beispielsweise eine Bewegung quer zur Ausrichtung des Fahrgestells durch eine Bewegung in längs zur Ausrichtung des Fahrgestells und eine Rotation um die Hochachse der Fahrplattform ersetzt werden. Die Steuerungseinheiten sind in der Lage, die eigentliche Querfahrt durch Bewegungsbefehle zu ersetzen, welche sich zusätzlich auch variabel an die Platzverhältnisse anpassen falls ein erstes Manöver nicht zur gewünschten Endlage führt. Vorzugsweise weisen bei dieser Weiterbildung zudem die Laufräder einer oder beider Doppelradeinheiten einen relativ großen Abstand auf, um einem Kippen der Fahrplattform entgegen zu wirken. Vorzugsweise weist der Abstand der Laufräder mindestens die Hälfte der Breite der Fahrplattform auf.

Die möglichen Anwendungen für die Fahrplattform sind als besonderer Vorteil sehr weitreichend, da verschiedene Aufbauten auf der Oberseite des Fahrgestells angeordnet werden können.

Die Fahrplattform ist beispielsweise für den Transport von Personen ausbildbar. Die zu transportierende Person sitzt bevorzugt in einem Fahrgastaufbau, der als Kabine ausgebildet ist, und ist so gegen Witterungseinflüsse gesichert.
Die Fahrplattform befördert die Person dann je nach technischer Ausstattung manuell gesteuert oder autonom an den gewünschten Zielort.

Ein weiterer wichtiger Anwendungsfall ist der innerbetriebliche Warentransport. Hierzu kann die Fahrplattform bevorzugt in den Abmessungen einer Euro-Palette in den Maßen von 1200 mm x 800 mm ausgebildet sein.

Ferner ist es möglich, die Fahrplattform als Basis für einen Rollstuhl für behinderte Menschen zu verwenden.

Die Antriebseinheit ist gemäß einer vorteilhaften Weiterbildung dazu ausgebildet, die Laufräder einer Doppelradeinheit in zueinander entgegengesetzter Richtung anzutreiben. Die Antriebseinheit weist hierzu entweder zwei Elektromotoren, welche unabhängig voneinander in entgegengesetzen Richtungen betrieben werden können und die Radantriebe ausbilden, oder sie weist mindestens ein zusätzliches Getriebe auf. Ein solches Getriebe erlaubt durch ein Schalten einer Anordnung von beispielsweise Zahnrädern die Umkehr der Laufrichtung.

Der Vorteil liegt hier in der Möglichkeit, Lenkbewegungen auf kleinstem Raum auszuführen.

Nach einer anderen Weiterbildung weist mindestens eine Doppelradeinheit einen Positionssensor auf, der ausgebildet ist, eine Winkelstellung des Drehgestells gegenüber dem Fahrgestell zu erfassen. Der Positionssensor ist mit der Steuerungseinheit datenverbunden und ferner so ausgebildet, die Informationen über die erfasste Winkelstellung, nachfolgend als Winkelstellungsdaten bezeichnet, an die Steuerungseinheit zu übertragen.
Damit liegen in der Steuerungseinheit die Informationen vor, in welcher Winkelstellung sich das Drehgestell gegenüber dem Fahrgestell befindet. Somit ist der Steuerungseinheit bekannt, ob eine Geradeausfahrt oder eine Kurvenfahrt erfolgt. Ferner ist der Radius einer Kurvenfahrt bekannt. Die Steuerungseinheit kann damit anhand der in sich eingegebenen Fahrbefehle, beispielsweise eines Fahrers, errechnen, mit welchen Drehgeschwindigkeiten jedes der beiden Laufräder gedreht werden muss, um die dem Fahrbefehl entsprechende gewünschte Lenk- und Fahrbewegung des Fahrzeugs auszuführen. Vorzugsweise weisen in dieser Weiterbildung jedoch alle Doppelradeinheiten einen Positionssensor auf, so dass die Stellung der Drehgestelle aller Doppelradeinheiten zueinander exakt erfasst und ausgewertet werden kann.

Nach einer weiteren vorteilhaften Weiterbildung überschreitet ein Abstand der Laufräder, gemessen von dem Mittelpunkt von deren Aufstandsflächen auf einer Fahrbahn, nicht den Durchmesser der Laufräder.
Ein weiterer Vorteil der Erfindung ergibt sich aus der möglichen räumlichen Nähe der beiden Laufräder. Die beiden Laufräder sind somit wie Zwillingsräder angeordnet und können nach bestimmten Vorschriften als ein einziges Rad gelten. Besonders bevorzugt übersteigt der Abstand der Laufräder, gemessen von dem Mittelpunkt von deren Aufstandsflächen auf einer Fahrbahn, 460 mm nicht.

Beispielsweise ist es auf diese Weise möglich, ein Fahrzeug mit einer erfindungsgemäßen Fahrplattform im Sinne von bestimmten Vorschriften als dreirädriges Fahrzeug auszubilden, indem an dem Fahrgestell zwei weitere aktiv angetriebene Doppelradeinheiten angeordnet sind. Hieraus ergeben sich wirtschaftliche Vorteile, da dreirädrige Fahrzeuge anderen Bestimmungen als mindestens vierrädrige Kraftfahrzeuge unterliegen. Dies gilt insbesondere für Typengenehmigungsverfahren für die dreirädrigen Fahrzeuge insgesamt als auch für Bauteile und Baugruppen hierfür.

Gemäß dieser vorteilhaften Weiterbildung ist es sogar möglich, ein im Rechtssinne dreirädriges Fahrzeug mit einem sechsrädrigen Allradantrieb auszubilden, wenn man die Anzahl der Laufräder betrachtet.

Diese Kombination aus einem sechsrädrigen Allradantrieb mit einem dreirädrigen Fahrzeug im vorbeschriebenen Sinne ermöglicht besondere Vorteile, weil die Laufräderpaare nicht lediglich in zwei Spuren, sondern in drei Spuren in einem Fahrbahnkontakt stehen. Zu Einen wirkt dies durch die Verteilung der Lasten vorteilhaft einer Spurrinnenbildung auf einer Fahrbahn entgegen. Zum anderen ergeben sich besondere Vorteile in Bezug auf das Traktionsverhalten und die Fahrdynamik.

In einer weiteren vorteilhaften Weiterbildung ist dem Drehgestelllager mindestens einer Doppelradeinheit ein Dämpfungselement zugeordnet. Das Dämpfungselement ist ausgebildet, eine Dämpfung einer Verdrehbewegung des Drehgestells um die Vertikalachse zu bewirken.

Der Vorteil dieser Weiterbildung besteht in einer Erhöhung der Lenkstabilität und der Fahrstabilität. Insbesondere bei Fahrbahnunebenheiten, die nicht gleichmäßig auf beide Laufräder wirken, wird mittels des Dämpfungselements verhindert, dass sich das Drehgestell plötzlich um die Vertikalachse verdreht. Darüber hinaus wirkt das Dämpfungselement einem evenuellen Flattern des Drehgestells entgegen.

Das Dämpfungselement kann passiv ausgebildet sein und setzt hohen Winkelgeschwindigkeiten einer Verdrehbewegung des Drehgestells in dem Drehgestelllager einen hohen Widerstand entgegen. Ferner kann das Dämpfungselement auch aktiv ausgebildet sein, indem beispielsweise anhand von Winkelstellungsdaten, die ein Positionssensor aufgenommen hat, von der Steuerungseinheit plötzliche Winkelstellungsänderungen erfasst werden, die nicht den Winkelstellungen entsprechen, die zu den Steuerbefehlen der Steuerungseinheit an die Radantriebe kompatibel sind. Hierdurch wird mittels der Steuerungseinheit ein Befehl ausgegeben und durch den Befehl ein Dämpfungselement aktiviert, welches einer weiteren plötzlichen Winkelstellungsänderung entgegenwirkt.

Die Erfindung wird als Ausführungsbeispiel anhand von
- Fig. 1: Funktionsdarstellung Fahrplattform in einer Ausbildung mit zwei Doppelradeinheiten in einer Ansicht von unten
- Fig. 2: Fahrplattform in einer Ausbildung mit drei Doppelradeinheiten mit zentraler Steuereinheit
- Fig. 3: Funktionsdarstellung Fahrplattform bei einer Rotation um einen imaginären Punkt
- Fig. 4: Ausführung der Fahrplattform zum Personentransport
näher erläutert.

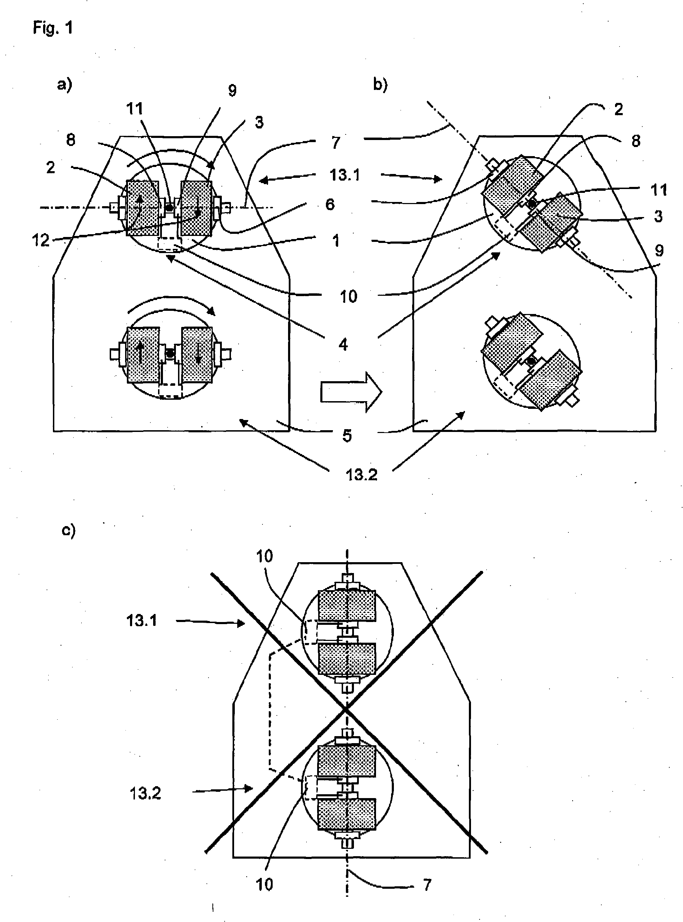

Figur 1 zeigt eine Funktionsdarstellung eines Ausführungsbeispiels in einer Ansicht der Unterseite der Fahrplattform. Es wird ein Lenkvorgang der Fahrplattform gezeigt. Die Ausgangsposition vor dem Lenkvorgang ist in der Teilabbildung a) und die Endposition nach dem Lenkvorgang ist in der Teilabbildung b) dargestellt. Im Folgenden wird exemplarisch eine Doppelradeinheit 13 beschrieben. Die anderen Doppelradeinheiten funktionieren in gleicher Weise.Das Drehgestell 1 der jeweiligen Doppelradeinheit (13) ist hier mit dem Fahrgestell 5 und der Radaufnahme 6 verbunden. Das Fahrgestell selbst ist nicht Bestandteil der erfindungsgemäßen Vorrichtung. In diesem Ausführungsbeispiel ist das Drehgestell als Radgabel an einer Platte ausgeführt. Das untere Ende der Radgabel ist mit der Radaufnahme 6 verbunden und die Platte ist mit dem Fahrgestell 5 verbunden. Die Verbindung zwischen der zylindrischen Platte des Drehgestells 1 und der hohlzylindrischen Öffnung des Fahrgestells 5 ist beweglich und ermöglicht eine Rotation des Drehgestells 1 um die Vertikalachse 11.
Das erste 2 und zweite Laufrad 3 ist auf einer gemeinsamen Horizontalachse 7 unabhängig voneinander gelagert und in der Radaufnahme 6 aufgenommen.

Die Antriebseinheit 4 besteht aus dem ersten 8 und dem zweiten Radantrieb 9 sowie der Steuerungseinheit 10.
Der erste Radantrieb 8 ist dem ersten Laufrad 2 und der zweite Radantrieb 9 ist dem zweiten Laufrad 3 zugeordnet. So können beide Laufräder 2, 3 unabhängig voneinander mit jeweils einem Drehmoment 12 beaufschlagt werden. Die Pfeile zeigen die Wirkrichtung des Drehmoments 12 in der Ausgangsposition (links) an. Durch die Drehmomente wird eine Lenkbewegung erzeugt indem das Drehgestell um die Vertikalachse 11 in die Endposition rotiert (rechts).
Die Steuerungseinheit 10 ist mit den beiden Radantrieben 8, 9 verbunden und regelt die Motorsteuerung durch ein übertragenes Steuersignal. In dieser Darstellung erzeugt die Steuerungseinheit 10 Steuersignale für zwei entgegengesetzte Drehmomente 12.

In der Teilabbildung c) ist die elektronisch verhinderte Stellung der Doppelradeinheiten 13.1, 13.2 dargestellt. Das Kreuz ist nicht Teil der Vorrichtung sondern zeigt an, dass es sich um eine nicht zulässige Stellung der Doppelradeinheiten 13.1, 13.2 handelt Die Steuereinheit 10 ist so ausgebildet, dass sie ein Zustandekommen dieser Doppelradeinheitenstellung verhindert und während des Fahrbetriebs durch alternative Doppelradeinheitenstellungen ersetzt, mittels derer die Zielposition mittels anderer Fahrbewegungen erreicht wird. Hierbei ist die Steuerungseinheit 10 jeweils in zwei dezentralen Baueinheiten an den Doppelradeinheiten 13.1, 13.2 angeordnet und über ein Bussystem, dargestellt durch eine Strichlinie, datenverbunden.

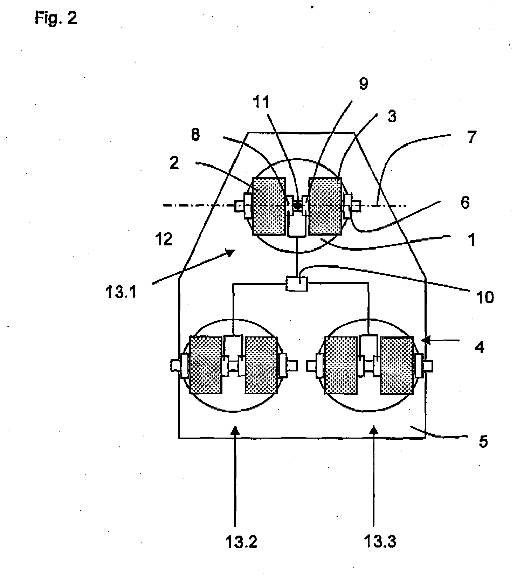

In Figur 2 ist eine Fahrplattform mit einer zentral ausgebildeten Steuerungseinheit 10 und drei Doppelradeinheiten 13 dargestellt. Durch die Verwendung von drei in einem Dreieck angeordneten Doppelradeinheiten 13 steht und fährt die Fahrplattform in jeder Radstellung stabil.
Der Aufbau der Doppelradeinheiten 13.1, 13.2, 13.3 unterscheidet sich zu Figur 1 lediglich in der baulich ausgelagert und zentral angeordneten Steuerungseinheit 10. Diese ist mit allen Radantrieben 8, 9 verbunden und steuert so alle Doppelradeinheiten 13.

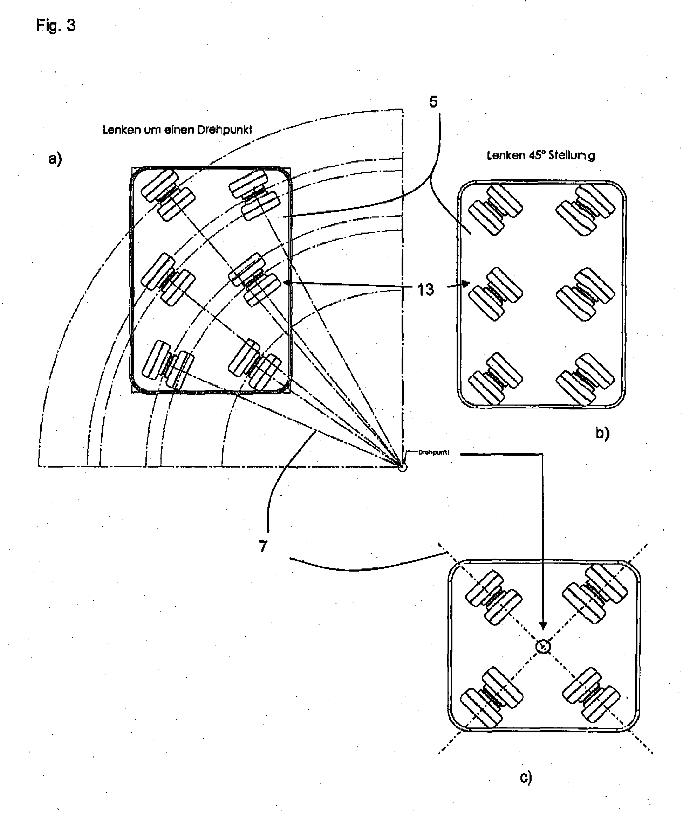

Figur 3 zeigt eine Darstellung einer Kurvenfahrt um einen Drehpunkt (Teilabb ildung a)), eine Lenkbewegung um 45° (Teilabbildung b)) und Rotation um einen Drehpunkt (Teilabbildung c).

Bei einer Fahrt um eine Kurve entspricht der Drehpunkt dem Scheitelpunkt der Kurve (Teilabbildung a)). Für eine Rotation des Fahrgestells 5 auf der Stelle ist der Drehpunkt in dem Zentrum des Fahrgestells 5 angeordnet (Teilabbildung c)). Hierfür richtet die Steuerungseinheit mittels der Radantriebe alle Doppelradeinheiten 13 wie dargestellt aus, so dass ihre jeweiligen Horizontalachsen 7 auf der Verbindungslinie zwischen dem Drehpunkt und dem vertikalen Drehpunkt der jeweiligen Doppelradeinheit liegen. Werden die Doppelradeinheiten durch deren Laufräder angetrieben, erfolgt eine Rotationsbewegung der Fahrplattform um den Drehpunkt.

Gemäß der Teilabbildung b) kann durch eine parallele Verdrehung der Doppelradeinheiten 13 eine Änderung der Fahrtrichtung bereitgestellt werden, bei der es sich um eine ausschließlich translatorische Bewegung ohne einen rotatorischen Bewegungsanteil handelt.

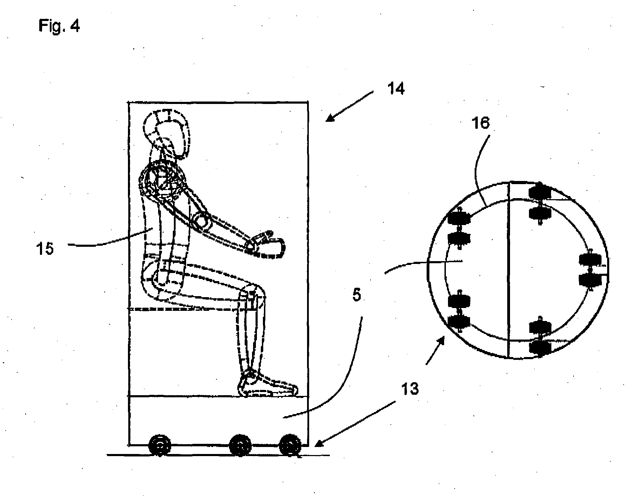

Figur 4 stellt die Fahrplattform in einer Ausführung zum Transport von Personen dar. Hierzu ist auf das Fahrgestellt 5, welche mit fünf Doppelradeinheiten angetrieben wird, ein Fahrgastaufbau aufgesetzt und befestigt. Der Fahrgastaufbau 14 umschließt in dieser Ausführung den Fahrgast 15 und bietet ihm die Möglichkeit eine sitzende Position einzunehmen.
Das Fahrgestell 5 ist in dieser Ausführung rund gestaltet und die fünf Doppelradeinheiten 13 sind konzentrisch auf einer Kreisbahn 16 in der Nähe der Außenkante angeordnet. Somit sind eine optimale Gewichtsverteilung und ein äußerst stabiler Stand der Fahrplattform gewährleistet. In einer hierzu modifizierten Ausbildung ist die Fahrplattform in der Art eines Bürostuhls ausgebildet und ermöglicht es dem Benutzer, sich beispielsweise innerhalb eines Büros zu verschiedenen Arbeitsplätzen zu bewegen.

### Verwendete Bezugszeichen

- 1: Drehgestell
- 2: erstes Laufrad
- 3: zweites Laufrad
- 4: Antriebseinheit
- 5: Fahrgestell
- 6: Radaufnahme
- 7: Horizontalachse
- 8: erster Radantrieb
- 9: zweiter Radantrieb
- 10: Steuereinheit
- 11: Vertikalachse
- 12: Drehmoment
- 13.1: erste Doppelradeinheit
- 13.2: zweite Doppelradeinheit
- 13.3: dritte Doppelradeinheit
- 14: Fahrgastaufbau
- 15: Fahrgast
- 16: Kreisbahn

## Patentansprüche

1. Fahrplattform,
aufweisend ein Fahrgestell, eine Mehrzahl von Doppelradeinheiten und eine Steuerungseinheit,
wobei die Doppelradeinheiten (13) an dem Fahrgestell angeordnet sind,
wobei jede der Doppelradeinheiten (13) ein Drehgestell (1), ein erstes (2) und ein zweites Laufrad (3) sowie eine Antriebseinheit (4) aufweist,
wobei das Drehgestell (1) gegenüber einem Fahrgestell (5) um eine Vertikalachse (11) in einem Drehgestelllager drehbar gelagert ist,
wobei das erste (2) und das zweite Laufrad (3) mittels einer Radaufnahme (6) rotierbar um eine gemeinsame Horizontalachse (7) an dem Drehgestell aufgenommen sind,
wobei die Antriebseinheit (4) einen ersten Radantrieb (8), einen zweiten Radantrieb (9) und eine Steuerungseinheit (10) aufweist,
wobei der erste Radantrieb (8) dem ersten Laufrad (2) und der zweite Radantrieb (9) dem zweiten Laufrad (3) zugeordnet ist,
und wobei jeder der beiden Radantriebe (8, 9) ausgebildet ist, das jeweils zugeordnete Laufrad (2, 3) separat mit einem Drehmoment (12) zu beaufschlagen,
und wobei das Drehgestell (1) ausgebildet ist, sich mittels einer unterschiedlichen Drehgeschwindigkeit der Laufräder (2, 3) gegenüber dem Fahrgestell (5) um die Vertikalachse (11) zu verdrehen.
wobei die Steuerungseinheit (10) mit den Radantrieben (8, 9) der Doppelradeinheiten (13) verbunden ist,
wobei die Steuerungseinheit (10) ausgebildet ist, Steuersignale an die Radantriebe (8, 9) zu übertragen.

2. Fahrplattform nach Anspruch 1,
**dadurch gekennzeichnet,**
**dass** die Antriebseinheiten (4) der Doppelradeinheiten (13) elektromotorisch ausgebildet sind.

3. Fahrplattform nach Anspruch 1 oder 2,
**dadurch gekennzeichnet,**
**dass** die Fahrplattform mindestens drei Doppelradeinheiten (13) aufweist

4. Fahrplattform nach Anspruch 1 oder 2,
**dadurch gekennzeichnet,**
**dass** die Fahrplattform zwei Doppelradeinheiten (13) aufweist und dass die Steuerungseinheit (10) ausgebildet ist, eine Stellung der beiden Doppelradeinheiten (13) zu verhindern, bei der die jeweilige Horizontalachse (7) der Laufräder beider Doppelradeinheiten (13) auf einer gemeinsamen Geraden angeordnet sind.

5. Fahrplattform nach einem der vorhergehenden Ansprüche,
**dadurch gekennzeichnet,**
**dass** die Antriebseinheit (4) ausgebildet ist, die Laufräder (2, 3) jeweils einer Doppelradeinheit (13) in zueinander entgegengesetzter Richtung anzutreiben.

6. Fahrplattform nach einem der vorhergehenden Ansprüche,
**dadurch gekennzeichnet,**
**dass** mindestens eine Doppelradeinheit (13) einen Positionssensor aufweist der ausgebildet ist, eine Winkelstellung des Drehgestells (1) gegenüber dem Fahrgestell (5) zu erfassen und Winkelstellungsdaten an die Steuerungseinheit (10) zu übertragen, wobei der Positionssensor mit der Steuerungseinheit datenverbunden ist.

7. Fahrplattform nach einem der vorhergehenden Ansprüche,
**dadurch gekennzeichnet,**
**dass** ein Abstand der Laufräder (2, 3), gemessen von dem Mittelpunkt von deren Aufstandsflächen, den Durchmesser der Laufräder (2; 3) nicht überschreitet.

8. Fahrplattform nach einem der vorhergehenden Ansprüche,
**dadurch gekennzeichnet,**
**dass** dem Drehgestelllager mindestens einer Doppelradeinheit (13) ein Dämpfungselement zugeordnet ist.
